# EUROPEAN PATENT APPLICATION

(11) **EP 4 075 094 A1**
(43) Date of publication of application: **19.10.2022**
(21) Application number: 21168419.6
(22) Date of filing: 14.04.2021
(51) Int. Cl.: G01B 11/02, G01B 11/08, G06T 7/62

(54) **DEVICE AND METHOD FOR DETERMINING GEOMETRIC FEATURES OF HOLLOW END OF AN OBJECT**

(71) Applicant: Vallourec Tubes France, 92190 Meudon (FR)
(72) Inventor: Kling E Silva, Lucas, 92190 Meudon (FR); Vollaire, Gonzague, 92190 Meudon (FR); Wilbert, Nicolas, 92190 Meudon (FR); Medeiros, Nestor, 92190 Meudon (FR)
(74) Representative: Francillout, Matthieu

(57) **Abstract**

Method and Device for measurement of geometrical parameters of a hollow end 2 of an object 1 comprising:
• a calibration tool 3 positioned close to the hollow end 2, said calibration tool 3 comprising at least one chart 5 of predetermined dimension
• A capture electronic 8 arranged to capture image data at different exposure parameters
• A control unit 7, comprising a memory to store image data associated with exposure parameters, a processing unit 72 arranged to compute a dimensional result from image data and at least one chart 5.

## Description

The present invention relates to the technical field of measurement devices and method for determining geometrical parameters of a hollow good. A hollow good can be a tubular good, such as for oil, gas exploitation or exploration, geothermal wells, energy, or industry.

Such hollow goods may be round tubulars for example, for wells, pipelines, transportation of gas or petrol. These tubulars have a round section. In industry hollow goods may be square, rectangle tubes, such as MSH tubes.

It is desirable to determine geometrical parameters of such hollow goods. Namely, for a round tubular good, it is desirable to determine the outside diameters or radiuses, the inside diameters or radiuses and wall thicknesses all around the circumference of the tubular object.

Some devices based on mechanical measurements or laser measurements exist, but these devices are bulky, and can be used only in mills, not on the field, or are time consuming on field. A need exists for a device and method that allow measuring with accuracy and on the field, and a solution which provides measurements rapidly and easy to use by operators.

The invention aims at overcoming the above-mentioned drawbacks.

More specifically, the invention aims at allowing to measure internal and external geometric features of an end of a tubular good with an improved accuracy in comparison to existing solutions.

According to a first aspect of the invention, it is proposed a method of measurement of a hollow end of an object, said hollow end having a face shape, the method comprising:
- Positioning a calibration tool close to the hollow end, the calibration tool comprising at least one chart,
- capturing an image data with a capture electronic,

Detecting presence of the face shape in said image data,
detecting presence of said at least one chart in said image data, determining at least one pixel value from the at least one chart and calculating geometrical parameters of the hollow end based on pixel measurements and at least one pixel value.

According to one aspect, said hollow end has a main axis Z defining a depth in the hollow end and the calibration tool comprises at least two charts, the said at least two charts being at two different depths, and the method further comprises:
- a step of determining a compensation factor from said at least two charts at two different depths, said compensation factor being arranged to compensate orientation of capture electronic in relation with the hollow end,
- calculating geometrical parameters of the hollow end is further based on said compensation factor.

According to further aspects, the calibration tool comprises n pair of charts, a pair of charts comprising two charts at two depths, and the method further comprises the steps of:
- dividing the image data in n sub-image data, each sub-image data containing a part of the hollow end and the two charts of one pair of the n pair of charts, and for each sub-image data,
- determining a pixel-value of sub-image data and a compensation factor of sub-image data from the two charts of the sub-image data,
- calculating geometrical parameters of the part of the hollow end based on pixel measurements and the pixel value of sub-image data and compensation factor of sub-image data,
and repeating steps i and ii for each of the n-1 sub-images data and building geometrical parameters of the hollow end from the geometrical parameters of the parts of the hollow end.

On another aspect, the step of capturing an image data with a capture electronic further comprises the steps of:
- Capturing a plurality of image data with different exposure parameters, recording a set of images data and selecting one image data in said set of images data based on exposure information.

The invention may also comprise in the step of applying one or more filters to the plurality of image data, that said one or more filters being chosen among grayscale, canny with sigma, erode borders, background disparity effects and threshold binarization

In one embodiment, the hollow end is a round tubular end and the face shape is a circle.

This embodiment may comprise the steps of:
- Fitting an inner circle in at least a part of the hollow end
- Determining a center of said inner circle
- Fitting an external circle in relation with at least a part of the hollow end
- Calculating geometrical parameters chosen among outside diameter, outside radius, inside diameter, inside radius, wall thickness

According to one aspect, the method of the invention further comprises the step of providing an augmented reality information, based on presence of at least one chart in image data, presence of hollow end in relation with said face shape, and on exposure information.

The invention is also a device for measurement of geometrical parameters of a hollow end of an object comprising:
- a calibration tool positioned close to the hollow end, said calibration tool comprising at least one chart of predetermined dimension
- A capture electronic arranged to capture image data at different exposure parameters
- A control unit, comprising a memory to store image data associated with exposure parameters, a processing unit arranged to compute a dimensional result from image data and at least one chart.

The invention may comprise the feature of the calibration tool comprising at least two charts at different depths.

The invention may comprises the feature of the capture electronic comprising a screen in a mobile device, the capture electronic being arranged to display on screen images captured by a CCD camera embedded in the mobile device, along with an indication of positioning of the mobile device.

The invention may comprise the feature of the control unit comprising a chart memory in which charts are recorded with an identifier, a pattern and a dimension, a chart depth.

Such a measuring device allows determining the geometrical dimensions of internal dimensions, external dimensions, wall thicknesses. When the hollow good is a tubular, the geometrical dimensions may be outside diameter or radius, inside diameter or radius, wall thicknesses. Such geometrical parameters may be determined for all the perimeter of the hollow good.

It should be understood that diameters or radiuses correspond to distances taken along lines contained in radial planes, said lines passing from a virtual center and intersecting with inside or outside surfaces of the object.

The present invention and its advantages will be better understood by studying the detailed description of specific embodiments given by way of nonlimiting examples and illustrated by the appended drawings on which:
- figure 1 is a schematic overview of a device according to the invention with a hollow end.
- figure 2 is a view of an example of chart,
- figure 3 is a schematic front view of a calibration tool according to an embodiment of the invention.

### Device

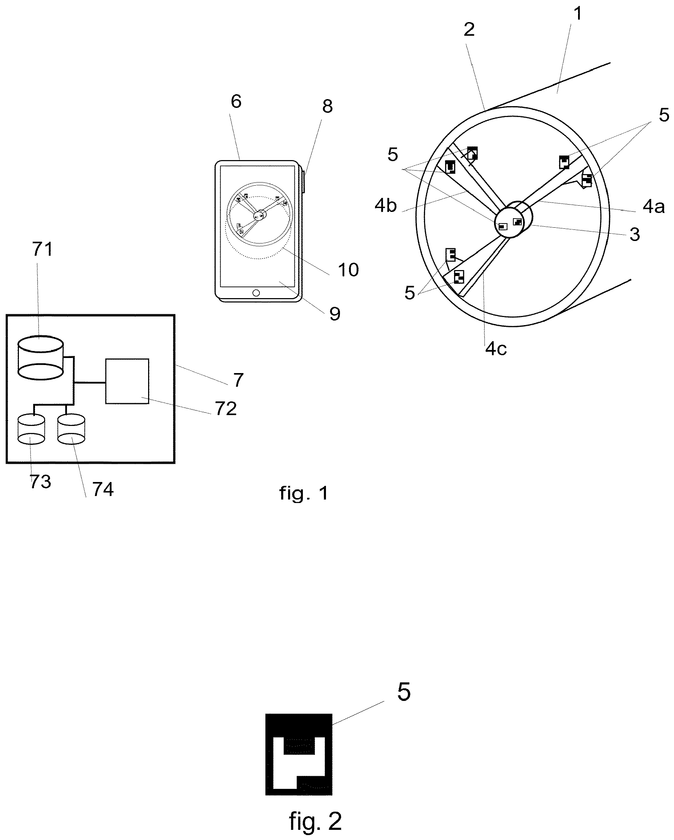

With reference to figure 1, the tubular component has a hollow end 2, with an outside diameter OD, an inside diameter ID, a wall thickness Wt. Whereas such a tubular component has nominal dimensions, the dimensions of the tubular component after manufacturing are generally within a tolerance interval, and accurate geometric data may be required. Furthermore, these dimensions vary all along the circumference of the tubular component. The tubular component 1 has a main axis Z, which is the main axis of the hollow end 2. For the purpose of this specification, the axis Z defines axis of depth, even if a pipe length is defined also along this Z axis.

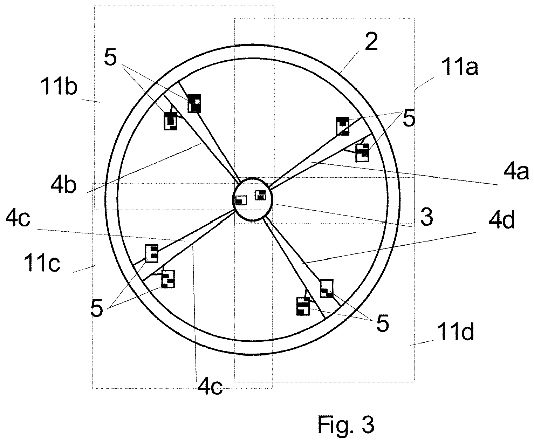

A calibration tool 3 is placed inside the hollow end 2 at a predetermined depth. The calibration tool 3 of figure 3 is represented having four arms 4a, 4b, 4c, 4d which maintain the calibration tool within the hollow end 2. Preferably, the arms 4a, 4b, 4c, 4d are arranged to substantially center the calibration tool 3 inside the hollow end 2. Alternatively, the calibration tool may be placed outside the hollow end, and close to the hollow end. The calibration tool may have three arms, or more than four arms.

The calibration tool 3 comprises at least one chart 5. On figure 1, the calibration tool 3 is represented with charts 5 on the arms, and two charts 5 per arms. A calibration tool 3 can have one chart. Preferably, the calibration tool 3 may have at least 2 charts. Preferably, a calibration tool 3 may have at least 6 charts. Preferably, when there are at least 2 charts, the charts are placed at two depths. A chart is an object with known dimensions. Preferably, charts placed on the calibration tool are arranged so as to be individually identifiable in a captured image data. Each chart is associated with a depth. The chart 5 of figure 2 comprises two zones in distinct colors presenting a high contrast, such as white and black. The shapes of the two zones defines at the same time an identification pattern, and some dimensions of the zones are known and of predetermined length and width.

The device for measuring a hollow end further comprises a Control Unit 7. The control unit 7 may be in a mobile device 6. The control unit 7 may be a computer in communication with said mobile device 6, by wire or wirelessly. The control unit 7 is arranged to receive and store pictures in a memory. The control unit is arranged to detect an inner edge and an outer edge of the hollow end 2.

The device further comprises a capture electronic 8. The capture electronic 8 comprises a CCD camera embedded in a mobile device 9. Preferably, the CCD camera has a resolution of at least 4 Megapixel for better accuracy of measurements. More preferably, the CCD camera has a resolution of at least 12 Megapixel for even better accuracy. The CCD camera can be a smartphone camera.

The capture electronic 8 is arranged to capture a plurality of images to form a set of images data. Further, the capture electronic is arranged to acquire said plurality of images at different capture parameters, such as aperture, focal length, time of exposition. Thus different images are taken with different parameters and images in the set of image data that are suitable for computing the image and extracting geometrical features are selected, taking in account that pictures can be taken on field, where environmental conditions, such as ambient light, objects, colors in background, are not controlled.

The mobile device 6 comprises a screen 9. The capture electronic is arranged to display on a screen 9 the images taken by the CCD camera 8 in addition to a positioning indicator in augmented reality, the positioning indicator being arranged to guide targeting of said hollow end, the positioning indicator being further arranged to output an indication of positioning of the CCD Camera relatively to the hollow end. The indication of positioning may be a binary information, where a first state being an improper position of the CCD camera relatively to the hollow end, that is a position unsuitable for the capture of image data, and where a second state is a suitable for the capture of image data. The indication of positioning can be materialized on the screen as a color, an arrow, a sign, a numeral. The position indicator is determined based on brightness of the image, presence in the image of the charts, and histogram analysis of image data to find a face shape.

Thus, the method and device according to the invention may combine histogram analysis on a first side, positioning of the capture electronic thanks to augmented reality on a second side, furthermore with checking brightness of image and presence of calibration tool, namely the at least one chart, so that this combination leads to capture and selection of image data such that the results are more accurate.

Preferably, the capture electronic 8 is arranged to take several image data to build a set of image data. Said set of image data comprises image data captured by the CCD Camera, associated with capture parameters, brightness of image, histogram analysis, chart presence check, presence of known shape in image data.

Said set of image data is stored in an image memory 71 of control unit 7. Control Unit 7 comprises a processing unit 72 arranged to read data from set of image data, resize image data, for example by crop and rotation.

The processing unit 72 is further arranged to apply filters to image data, said filters being chosen among Grayscale, Canny with sigma, erode borders, including background disparity effects and threshold binarization...

The processing unit 72 further comprises an object memory 73, said object memory may contain object data relative to the measured object, such as known shape, nominal dimensions of the objects, presence, and dimensions of bevels. In the example of a tubular object, the known shape is a circle, that is the end of the tubular object is similar to a circle, and therefore the nominal dimensions may be the nominal outside diameter or radius, the nominal inside diameter or radius, the nominal wall thickness, with our without bevels, and possibly dimensions of said bevel. As a non-limitative example, a bevel can be completed with information such that presence of bevel, localization on outside diameter, dimensions of 0.3mm at 45 degrees.

The processing unit 72 also comprises a chart memory 74 containing an identification code for each chart, a size relative to each chart, preferably two sizes relative to two directions along the chart, a chart depth of chart, which is a relative depth (a chart may be at depth zero, and another chart may be at a different depth. For example, the other chart may be at a depth of 4 mm. The processing unit 72 is further arranged to compute a dimensional result from data from image memory 71, data from object memory 73 and data from chart memory 74.

Preferably, the calibration tool has at least two charts 4a, 4b, the first chart 4a being at a first position, particularly having a first depth and having a first size, and the second chart 4b being at a second position, particularly having a second depth different from the first depth, having a second size. The processing unit is arranged to recognize the first chart, determine a first pixel value corresponding to the first size of the chart, and the processing unit is arranged to recognize the second chart, determine a second pixel value corresponding to the second size of the chart. The processing unit is arranged to determine a correction factor representative of a relative inclination of the part of the calibration tool in relation with the capture device, therefore, a relative inclination of at least part of the hollow end face which is close to the first and second charts. The processing unit computes the geometric feature further based on said correction factor.

On another aspect, the calibration tool 3 may comprise n pair of charts. The two charts of each pair have different depths. Each chart of the n pair having different positions. The processing unit may be further configured to divide image data in n regions or sub-image data 11a, 11b 11c 11d, each region containing one of the n pairs of charts, as represented in figure 3.

For example, the calibration tool 3 may comprise 6 charts arranged in pairs, the charts of a pair being at different depths and the processing unit is capable of identifying each of the 6 charts, and to define 4 sub-image data from an image data. The processing unit is arranged to determine a correction factor for each region. As a result, the accuracy of the measures is improved.

### Method

A hollow end of an object to measure has a face shape, substantially perpendicular to Z axis of the hollow end. Said face shape can be a circle for a hollow end of a round tubular, such as a pipeline. Said face shape can be rectangular or square for a MSH tubular used in industry. Two examples or cited but this does not limit definition of a face shape, which is a general geometric figure corresponding to the profile of a hollow end. A face shape can be hexagonal, octagonal, elliptical, such examples being given in a non-limitative manner.

The method according to the invention compute geometrical features of a hollow end. Geometrical features are mainly length measurements. Such length measurements are based on computational vision. A computer vision processing software is used, such as Anaconda, an opensource computer vision and machine learning software.

Basically, the method aims at
- facilitating a suitable positioning of the capture electronic 9 in relation with the hollow end 2,
- finding suitable capture parameters that improve image processing of pictures taken, then
- processing image with filters, finding an outer contour and/or an inner contour, counting pixels along a privileged direction between inner contour and outer contour, the privileged direction being, for a tubular hollow end, a line passing through the center of a circle outer or inner contour and intersecting with the outer contour and the inner contour,
- applying a pixel value to the counted pixels based on identification of a chart as a reference,
- On one aspect, when two charts at two depths are positioned on the calibration tool c and said charts are in the image data, applying a correction factor that compensate perspective effects in the image data which may be due to the relative position of the capture electronic 9 in relation with the hollow end 2, and therefore improving the accuracy of the measures.

In more details, the method of measurement of a hollow end 2 of an object 1 comprises a step of positioning a calibration tool 3close to said hollow end 2. A preferred embodiment about measuring a hollow end of a tubular object is disclosed, but the method is not limited to tubular objects. The hollow end 2 of a tubular object has a circle as face shape.

The calibration tool 3is preferably positioned inside the hollow end, as positioning the calibration device is easier. The calibration tool comprises at least one chart. The calibration tool may be placed outside the hollow end, and close to said hollow end. That means that the calibration tool is arranged such that the at least one chart is positioned at a distance less than an overall size of hollow end. For example, in the case of a tubular object, the at least one chart is at less than an outside diameter from an outside or inside surface of the hollow end. Preferably, said at least one chart is at less than a half of this overall size. More preferably, the at least one chart is at less than a quarter of the overall size from the interior surface or outer surface of the hollow end.

The method further comprises the step of capturing an image data with a capture electronic 8. The capture electronic is mobile. Preferably, the capture electronic is a mobile device such as a mobile phone, a tablet equipped with a CCD camera.

Then, the method comprises a step of detecting presence of face shape in the data image. In the example with a tubular object, a circle is detected. In this step, the at least one chart is detected. When n charts are used, then, this step requires that the n charts are detected. Thus, there is a first selection of image data.

A chart is an object having predetermined dimensions and which is recognizable. Such a chart may have the form of a data matrix, for example with four columns and four lines. Advantageously, such data matrix constitutes a pattern that is recognizable, so that each chart can be identified. Consequently, the dimensions of the chart are known and associated in a chart memory with an identifier of the chart, and preferably with a position information about the chart. At least, the position information contains a depth information.

Then, the method comprises a step of determining at least one pixel value based on the at least one chart, where a processing unit identifies a chart, compares the pixels occupied by the charts in the image data to the dimensions of this chart as stored in the chart memory, and output a pixel value representative of a real length. Then, multiplying a quantity of aligned pixels in a direction by the pixel value gives a length. Thus, the calculation of a geometrical parameters of the hollow end can be done based on pixel measurements on the data image. As a result, geometrical features of an hollow end object can be made even if the relative position of the capture device in relation with the object is not precisely known, particularly if the distance between the capture device and the hollow end of the object is not known.

The method has preferably an additional step requiring that the calibration tool has at least two charts, the charts being at least at two different depths. This additional step comprises determination of pixel values for each charts, and producing a compensation factor representative of an orientation of the capture electronic in relation with the hollow end, based on pixel values for the charts and relative known positions of the charts; then calculating geometrical features of the hollow end further based on said compensation factor. Thus, the results obtained are even more accurate and compensate for a misalignment between the capture device and the hollow end. Even more, an accurate alignment is not required, and the capture device can be held by hand by a user.

This late step may be generalized with n pairs of charts. In this case, the image data may be divided in several sub-image data, each sub-image data comprising a pair of charts. The charts of one pair are closed to each other and at different depths. Each sub-image data is processed with identification of chart, determination of pixel values for each chart, determination of a compensation factor applied to the sub-image data. Each sub-image data may have a part of data in common, or otherwise said, the sub-images have may partly overlapping together.
Besides, the method comprises a step of providing an augmented reality information to the user, the images taken by the capture device being displayed on a screen attached to the capture device, a known shape corresponding to the known shape of the hollow end being further displayed on said screen, such that the displayed known shape guiding the user with positioning the capture device, the augmented reality information further comprising an indication of suitable positioning of capture device. Preferably, the augmented reality information further comprises an indication relative to suitable exposure conditions. For example, the displayed known shape can be in red color and becomes green when both positioning of capture device is correct according to first steps of analysis of image data and after series of pictures have been taken at different exposure parameters. In fact, relatively to the movements of the users, which are slow, the capture device is able to take numerous pictures, with different exposure parameters, and the processing unit is arranged to analyze and select image data in a very fast manner, such that it is unnoticeable for the user.

On one aspect, for a hollow end being a tubular end, where the known shape is a circle, the method may comprise fitting a circle, preferably an inner circle, in at least a part of the hollow end, determining the center of said circle, fitting an external circle with a part of the hollow end, making straight line passing by center of said inner circle, calculating geometrical parameters chosen among outside diameter, outside radius, inside diameter, inside radius, wall thickness. These calculations may be done for every half degree around the center of inner or outer fitted circles. Such calculations can be done at higher or lower increments, such as every quarter degree, or every two degrees, depending on requirements of customers. Calculations done are very accurate thanks to the use of pixel values and compensation factors, possibly determined for each n-sub - image data.

### Results

Tests have been conducted on tubular goods with round shape, such as pipeline tubes. A mobile phone equipped with a camera having a resolution of 12 Megapixels, connected to a computer were used to measures parameters of hollow end of pipelines.

With such equipment, is was found that according to the camera resolution, direct measurements can provide an accuracy of measurements with a resolution of 0.14 mm for larger pipes, such as pipes with an outside diameter of 406.4 mm (16 inches), and a resolution of 0.05 mm for small pipes, such as pipes with an outside diameter of 177.8 mm (7 inches).

With the use of 4 pair of charts and analysis of the picture cut in 4 frames, accuracy was improved with a resolution of 0.07 mm for larger pipes, such as pipes with an outside diameter of 406.4 mm (16 inches), and a resolution of 0.03 mm for small pipes, such as pipes with an outside diameter of 177.8 mm (7 inches).

The geometrical parameters measured, such as outer diameter, outer radius, inner diameter, inner radius, wall thickness can be done up to every fraction of degree (such as 0.25; 0.5 degrees) on 360 degrees around the tubular hollow end, around axis Z.

The device and method of the invention lead to an improvement of the accuracy of the measures of geometrical parameters of a hollow end in comparison with mechanical measuring devices, altogether with a great easiness of handling of the measuring apparatus such as a mobile device.

## Claims

1. A method of measurement of a hollow end 2 of an object 1, said hollow end 2 having a face shape, the method comprising:
• Positioning a calibration tool 3 close to the hollow end 2, the calibration tool comprising at least one chart 5,
• Capturing an image data with a capture electronic 8,
• Detecting presence of the face shape in said image data, detecting presence of said at least one chart in said image data,
• Determining at least one pixel value from the at least one chart and calculating geometrical parameters of the hollow end 2 based on pixel measurements and at least one pixel value.

2. The method of claim 1,wherein said hollow end 2 has a main axis Z defining a depth in the hollow end 2, wherein the calibration tool 3 comprises at least two charts 5, the said at least two charts being at two different depths, and the method further comprises
• a step of determining a compensation factor from said at least two charts 5 at two different depths, said compensation factor being arranged to compensate orientation of capture electronic 8 in relation with the hollow end 2,
• calculating geometrical parameters of the hollow end 2 is further based on said compensation factor.

3. Method according to one of the preceding claims, wherein the calibration tool 3 comprises n pair of charts 5, a pair of charts 5 comprising two charts 5 at two depths, and the method further comprises the steps of
• dividing the image data in n sub-image data, each sub-image data containing a part of the hollow end and the two charts of one pair of the n pair of charts, and for each sub-image data,
i. determining a pixel-value of sub-image data and a compensation factor of sub-image data from the two charts of the sub-image data,
ii. calculating geometrical parameters of the part of the hollow end based on pixel measurements and the pixel value of sub-image data and compensation factor of sub-image data,
• repeating steps i and ii for each of the n-1 sub-images data and building geometrical parameters of the hollow end from the geometrical parameters of the parts of the hollow end.

4. Method of one of previous claims, in which the step of capturing an image data with a capture electronic 8 further comprises the steps of:
• Capturing a plurality of image data with different exposure parameters, recording a set of images data and selecting one image data in said set of images data based on exposure information.

5. Method of claim 2, comprising the step of applying one or more filters to the plurality of image data, said one or more filters being chosen among grayscale, canny with sigma, erode borders, background disparity effects and threshold binarization.

6. Method according to one of the preceding claims, wherein the hollow end 2 is a round tubular end and the face shape is a circle.

7. Method according to the preceding claim, further comprising the steps of
• Fitting an inner circle in at least a part of the hollow end 2
• Determining a center of said inner circle
• Fitting an external circle in relation with at least a part of the hollow end 2
• Calculating geometrical parameters chosen among outside diameter, outside radius, inside diameter, inside radius, wall thickness.

8. Method according to claim 4 and one another of the preceding claims, further comprising the step of providing an augmented reality information, based on presence of at least one chart 5 in image data, presence of hollow end 2 in relation with said face shape, and on exposure information.

9. Device for measurement of geometrical parameters of a hollow end 2 of an object 1 comprising:
• a calibration tool 3 positioned close to the hollow end 2, said calibration tool 3 comprising at least one chart 5 of predetermined dimension
• A capture electronic 8 arranged to capture image data at different exposure parameters
• A control unit 7, comprising a memory to store image data associated with exposure parameters, a processing unit 72 arranged to compute a dimensional result from image data and at least one chart 5.

10. Device according to claim 9 in which the calibration tool 3 comprises at least two charts at different depths.

11. Device according to any of the claims 9 to 10, in which the capture electronic 8 comprises a screen 9 in a mobile device, the capture electronic 8 being arranged to display on screen 9 images captured by a CCD camera embedded in the mobile device, along with an indication of positioning of the mobile device.

12. Device according to any of the claims 9 to 11, in which the control unit 7 comprises a chart memory 74 in which charts are recorded with an identifier, a pattern and a dimension, a chart depth.
